## Europäisches Patentamt
## European Patent Office
## Office européen des brevets

(19)

(11) Veröffentlichungsnummer: **0 014 716**
**B1**

(12) **EUROPÄISCHE PATENTSCHRIFT**

(45) Veröffentlichungstag der Patentschrift:
14.07.82

(21) Anmeldenummer: **79900416.3**

(22) Anmeldetag: **26.04.79**

(86) Internationale Anmeldenummer:
**PCT/CH 79/00059**

(87) Internationale Veröffentlichungsnummer:
**WO 79/01000 (29.11.79** Gazette **79/24)**

(51) Int. Cl.³: **B 29 C 27/06**

(54) **VERFAHREN UND GERÄT ZUM VERBINDEN THERMOPLASTICHER LEITUNGSELEMENTE.**

(30) Priorität: **28.04.78 CH 4696/78**

(43) Veröffentlichungstag der Anmeldung:
**03.09.80 Patentblatt 80/18**

(45) Bekanntmachung des Hinweises auf die Patenterteilung:
**14.07.82 Patentblatt 82/28**

(84) Benannte Vertragsstaaten:
**FR**

(56) Entgegenhaltungen:
**CH-A-529 628**

(73) Patentinhaber: **STURM, Werner,
Allerheiligenstrasse 624, CH-4614 Hägendorf (CH)**

(72) Erfinder: **STURM, Werner, Allerheiligenstrasse 624,
CH-4614 Hägendorf (CH)**

(74) Vertreter: **Meyer, Reinhard, Dipl.-Ing. et al, c/o Dr. A. R.
EGLI & CO Patentanwälte Postfach 473, CH-8034 Zürich
(CH)**

BUNDESDRUCKEREI BERLIN

## Verfahren und Gerät zum Verbinden thermoplastischer Leitungselemente

Die Erfindung betrifft ein Verfahren zum Verbinden thermoplastischer Leitungselemente mit Hilfe einer eine Wicklung aus einem elektrischen Widerstandsdraht aufweisenden Muffe, bei dem nach Anschluß an eine elektrische Stromquelle Wärme in der Wicklung erzeugt und durch Zuführung einer bestimmten Schweißenergie in zwei Zeitabschnitten, nämlich einer Vorwärmzeit mit geringerer Energiemenge als zum Verschweißen erforderlich und der eigentlichen Schweißzeit, die Muffe mit den Leitungselementen verschweißt wird, und ein Gerät zur Durchführung des Verfahrens.

Ein derartiges Verfahren ist durch die CH-A-529 628 bekannt. Hierbei soll durch die Vorwärmung durch Schrumpfen der Muffe ein guter Kontakt zwischen diesen und den Leitungsteilen erreicht werden, um während des eigentlichen Schweißvorgangs einen guten Wärmeübergang zu ermöglichen. Zwischen den beiden Zeitabschnitten ist eine längere Abkühlzeit vorgesehen.

Beim Verbinden der Enden von Leitungselementen durch von diesen getrennte Muffen ist der strombeschickte Leiter meistens eine Wicklung aus einem Widerstandsheizdraht, dessen Windungen mit Abstand voneinander in der Nähe der Innenwandung des Muffenkörpers angeordnet sind. Beim Stromdurchgang durch die Wicklung wird die innenwandige Partie der Muffe und ebenso die benachbarten Teile der Leitungselemente in bindungsfähigen Zustand gebracht und dadurch miteinander verschweißt, ohne daß an der Verbindungsstelle Deformationen der Teile, d. h. der Enden der Leitungselemente und des Muffenkörpers, auftreten. Das Anwendungsgebiet der erwähnten, als Elektro-Schweißmuffen bezeichneten Muffen hat sich seit ihrer Einführung ständig erweitert und umfaßt heute alle gängigen Durchmesserbereiche. Es hat sich aber gezeigt, daß bei größeren Rohrdurchmessern, z. B. für Nenndurchmesser 160—400 mm, Probleme auftreten, die sich bei kleineren Nenndurchmessern nicht oder nur wenig auswirken. Elektro-Schweißmuffen für die genannten größeren Nenndurchmesser werden aus einem rohrförmigen Muffenkörper hergestellt, der zunächst unter Erwärmung aufgeweitet wird, um dem Muffenkörper eine Schrumpfreserve zu erteilen, die, an der Verbindungsstelle durch den Schweißvorgang ausgelöst, die Überbrückung der Spiele zwischen den Durchmesserdifferenzen und das Pressen des Muffenkörpers auf die Enden der Leitungselemente bewirkt. Die meistens monofile Wicklung wird in aufgeweitetem Zustand des Muffenkörpers eingebracht und mit diesen verbunden. Es findet aber bereits während der Lagerung, d. h. in kaltem Zustand, eine gewisse Rückbildung der Schrumpfreserve statt, was durch eine entsprechend größere Aufweitung des Muffenkörpers berücksichtigt wird. Der in den Muffenkörper eingebrachte Widerstandsheizdraht wird somit schon bei der Lagerung der Elektro-Schweißmuffen durch das Schrumpfen des Muffenkörpers einer Druckbeanspruchung unterworfen. Da jedoch die Windung im thermoplastischen Material eingebettet ist, werden die einzelnen Windungen entsprechend der wirksamen Druckspannung verkürzt. Wird nun für die Herstellung einer Schweißverbindung die Wicklung einer solchen Muffe mit elektrischem Strom beschickt, fällt die vom Muffenkörpermaterial ausgeübte Stützwirkung weg und es kann vorkommen, daß zwei benachbarte Windungen sich metallisch berühren.

In gleichem Sinne wirkt beim Schweißvorgang die durch den Anstieg der Temperatur verursachte Ausdehnung des Widerstandsheizdrahtes, die zu einer wesentlichen Verlängerung desselben führt. Die durch die Schweißwärme ausgelöste Schrumpfreserve des Muffenkörpers und die gleichzeitig auftretende Verlängerung des Widerstandsheizdrahts führen dazu, daß die einzelnen Windungen seitlich ausweichen, da zwischen den Windungen das thermoplastische Material am stärksten erwärmt und dort am fließfähigsten ist. Wie bereits erwähnt wurde, wirken sich die beiden erwähnten Faktoren Schrumpfreserve und Drahtausdehnung bei großen Nenndurchmessern stärker aus und können dort eher zu Störungen führen als bei kleinen Nenndurchmessern. Selbst wenn auch die beim Lagern auftretende Schrumpfung durch einen zusätzlichen Aufwand vermieden werden könnte, z. B. durch Aufsetzen der Muffe auf einen metallischen Zylinder, der das Schrumpfen verhindert, so bleibt trotzdem die durch die Erwärmung auftretende Verlängerung des Widerstandsheizdrahts bestehen und damit die Möglichkeit eines Kurzschlusses benachbarter Windungen, was zu erhöhter Stromaufnahme und zur Beeinträchtigung der Verschweißung führt.

Der Erfindung liegt die Aufgabe zugrunde, ein Verfahren der eingangs beschriebenen Art so auszugestalten, daß beim Verbinden thermoplastischer Leitungselemente mit Hilfe einer Elektro-Schweißmuffe eine gegenseitige Berührung der Windungen ihrer Heizwicklung mit Sicherheit vermieden wird.

Diese Aufgabe wird gemäß der Erfindung dadurch gelöst, daß die Vorwärmzeit und die Schweißzeit ohne Pause aufeinanderfolgen und daß während der Vorwärmzeit etwa die Hälfte der Nennleistung der Muffe als Vorwärmleistung zugeführt wird.

Das erfindungsgemäße Verfahren wird mittels eines Geräts durchgeführt, welches einen Schweißstromkreis mit einem Gesamtschaltkreis für die Dosierung der von der Muffe benötigten Schweißenergie und einen Vorwärmzeitschaltkreis aufweist, welch letzterer nach Ablauf der Vorwärmzeit das Gerät auf die Nennschweißleistung umschaltet, während der Gesamtzeitschaltkreis nach erfolgter Zufuhr der Schweißenergie den die Muffe mit dem Netz verbindenden Stromkreis unterbricht.

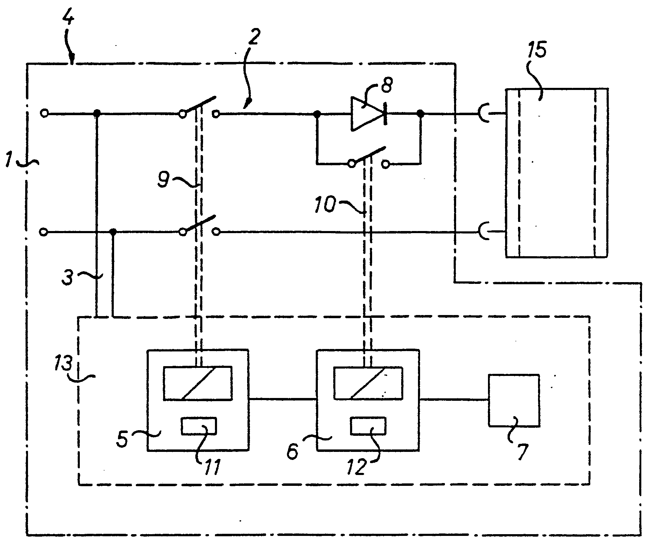

Die Erfindung ist in der Zeichnung in einem Ausführungsbeispiel dargestellt und nachfolgend beschrieben. Die Figur zeigt die schematische Darstellung eines Schweißgeräts zur Durchführung des erfindungsgemäßen Verfahrens.

In der Figur ist ein Netzanschluß 1 dargestellt, der zum Anschluß eines Schweißgeräts 4 zum Herstellen von Verbindungsstellen an thermoplastischen Leitungselementen mittels einer Elektro-Schweißmuffe 15 dient. Die Elektro-schweißmuffe 15 ist über einen Schweißstromkreis 2 mit dem Netzanschluß 1 verbunden.

Vom Schweißstromkreis 2 zweigt eine Speiseleitung 3 zu einem nicht dargestellten Netzteil ab, durch den eine Kleinspannung zur Versorgung der Regel-, Steuer- und Meßmittel 13 des Geräts 4 erzeugt wird. Als Schweißgerät 4 kann ein bekanntes Elektro-Schweißgerät verwendet werden, welches die Heizenergie für die Elektro-Schweißmuffe 15 dosiert, und zwar z. B. über eine Stromregelung mit Zeitschaltkreis (CH-A-398 957) oder mit einem geregelten Integrationskreis aus Strom und Zeit (CH-A-523 130).

Wie aus der Figur ersichtlich ist, weist das Elektro-Schweißgerät zwei Zeitschaltkreise auf, einen Gesamtzeitschaltkreis 5, der die der Elektro-Schweißmuffe 15 zuzuführende Heizenergie dosiert und nach Erreichen des Sollwertes durch eine Schaltstufe 9 den Schweißstromkreis 2 unterbricht, und einen zusätzlichen, als Vorwärmzeitschaltkreis 6 bezeichneten Zeitschaltkreis, der nach einer als Vorwärmzeit bezeichneten Zeitdauer eine im Schweißstromkreis 2 liegende Diode 8 mit einer Schaltstufe 10 überbrückt. Durch diese Anordnung ist es möglich, der Elektro-Schweißmuffe 15 während der Vorwärmzeit eine kleinere Spannung anzubieten, so daß die Temperatur des Heizdrahts nur unwesentlich über derjenigen des Fließpunkts des thermoplastischen Materials des Muffenkörpers liegt. Geht man davon aus, daß die Schweißleistung dem öffentlichen Wechselstromnetz entnommen wird, so erfolgt während der Vorwärmzeit der Schweißvorgang mit der halben Leistung.

Dadurch, daß während der Vorwärmzeit nur eine Teilleistung für die Erwärmung der Elektro-Schweißmuffe 15 zur Verfügung steht, wird erreicht, daß die Ausdehnung des Heizdrahts entsprechend kleiner ist. Wegen der langsameren Erwärmung während der Vorwärmzeit ist die Fließfähigkeit des die Heizdrahtwicklung umgebenden Materials gleichmäßiger, so daß sich die Windungen der Heizdrahtwicklung radial aufweiten können. Auch erfolgt die Auslösung der Schrumpfreserve des Muffenkörpers langsamer, so daß die Aufwärmung des thermoplastischen Materials und das Schrumpfen des Muffenkörpers so langsam abläuft, daß die einzelnen Windungen der Heizdrahtwicklung sich nicht seitlich, sondern nur radial ausdehnen.

Die für die Herstellung einer Verbindung mittels einer Elektro-Schweißmuffe erforderliche Gesamtschweißzeit setzt sich demnach aus einer Vorwärmzeit und der eigentlichen Schweißzeit zusammen. Die Vorwärmzeit wird zweckmäßig mittels eines Zählers mit Vorsignal bestimmt. Ist das Vorsignal erreicht, wird über die Schaltstufe 10 die der Elektro-Schweißmuffe 15 vorgeschaltete Diode 8 überbrückt.

Die Inbetriebnahme des Geräts 4 erfolgt durch einen Startkreis 7, durch den über den Gesamtzeitschaltkreis 5 die Schaltstufe 9 eingeschaltet, womit die Vorwärmzeit beginnt. Nach Erreichen des Vorsignals des Vorwärmzeitschaltkreises wird die Diode 8 überbrückt und es beginnt die Schweißzeit, nach Ablauf welcher der Gesamtzeitschaltkreis 5 mit Hilfe der Schaltstufe 9 den Schweißstomkreis 2 unterbricht. Durch z. B. optische Anzeigemittel 11, 12 wird die Art des Betriebszustands angezeigt, d. h. das Vorwärmen und das Schweißen.

Das beschriebene Gerät 4 erlaubt somit, auf verhältnismäßig einfache Weise die vor allem bei Elektro-Schweißmuffen größeren Durchmessers auftretenden Probleme wirksam zu beherrschen, wodurch einwandfreie Verschweißungen erreicht werden. Es können Vorwärmzeiten für die Nenndurchmesser 160–400 von etwa 1–10 min vorgesehen werden.

**Patentansprüche**

1. Verfahren zum Verbinden thermoplastischer Leitungselemente mit Hilfe einer eine Wicklung aus einem elektrischen Widerstandsdraht aufweisenden Muffe (15), bei dem nach Anschluß an eine elektrische Stromquelle (1) Wärme in der Wicklung erzeugt und durch Zuführen einer bestimmten Schweißenergie in zwei Zeitabschnitten, nämlich einer Vorwärmzeit mit geringerer Energiemenge als zum Verschweißen erforderlich und der eigentlichen Schweißzeit, die Muffe (15) mit den Leitungselementen verschweißt wird, dadurch gekennzeichnet, daß die Vorwärmzeit und die Schweißzeit ohne Pause aufeinanderfolgen und daß während der Vorwärmzeit etwa die Hälfte der Nennleistung der Muffe als Vorwärmleistung zugeführt wird.

2. Gerät zur Durchführung des Verfahrens nach Anspruch 1, dadurch gekennzeichnet, daß einem Schweißstromkreis (2) ein Gesamtzeitschaltkreis (5) für die Dosierung der von der Muffe (15) benötigten Schweißenergie und ein Vorwärmzeitschaltkreis (6) zugeordnet sind, welch letzterer nach Ablauf der Vorwärmzeit den Schweißstromkreis (2) auf Nennschweißleistung umschaltet, während der Gesamtzeitschaltkreis (5) nach erfolgter Zufuhr der Schweißenergie den Schweißstromkreis (2) unterbricht.

3. Gerät nach Anspruch 2, dadurch gekennzeichnet, daß im Schweißstromkreis (2) eine Diode (8) liegt, die nach Ablauf der Vorwärmzeit durch eine parallel geschaltete Schaltstufe (10) überbrückbar ist.

4. Gerät nach Anspruch 2 oder 3, dadurch gekennzeichnet, daß der Gesamtschaltkreis (5) und der Vorwärmzeitschaltkreis (6) Anzeigemittel (11, 12) zur Anzeige des Betriebszustands des Geräts (4) aufweisen.

## Claims

1. Method for joining thermoplastic line elements with the aid of a sleeve (15) having a winding of an electrical resistance wire, whereby after connecting to an electric power supply (1) heat is produced in the winding and by supplying a given welding energy in two time periods, namely a preheating time with a lower energy quantity than that required for welding and the actual welding time, the sleeve (15) is welded to the line element, characterised in that the preheating time and the welding time follow one another without a break and during the preheating time approximately half the rated power of the sleeve is supplied as preheating power.

2. Apparatus for performing the method according to claim 1, characterised in that an overall timing circuit (5) for metering the welding energy required by the sleeve (15) and a preheating timing circuit (6) are associated with a welding circuit (2), whereby at the end of the preheating time the preheating timing circuit (6) switches the welding circuit (2) over to rated welding power, whilst after the welding energy has been supplied the overall timing circuit (5) interrupts the welding circuit (2).

3. Apparatus according to claim 2, characterised in that there is a diode (8) in the welding circuit (2) and at the end of the preheating time said diode can be bridged by a parallel-connected switching stage (10).

4. Apparatus according to claims 2 or 3, characterised in that the overall timing circuit (5) and the preheating timing circuit (6) have indicating means (11, 12) for indicating the operating state of the apparatus (4).

## Revendications

1. Procédé pour relier des éléments de conduits thermoplastiques à l'aide d'un manchon (15) comportant un enroulement formé d'un fil électrique résistant, selon lequel, après raccordement à une source de courant électrique (1), de la chaleur est produite dans l'enroulement et, par application d'une énergie déterminée de soudage en deux intervalles de temps, à savoir un intervalle de préchauffage où l'on fait intervenir une quantité d'énergie plus faible qu'il n'est nécessaire pour le soudage, et l'intervalle de soudage proprement dit, le manchon (15) est soudé avec les éléments de conduits, procédé caractérisé en ce que l'intervalle de préchauffage et l'intervalle de soudage se succèdent sans pause et en ce que, pendant l'intervalle de préchauffage, à peu près la moitié de la puissance nominale est appliquée au manchon comme puissance de préchauffage.

2. Appareil pour la mise en œuvre du procédé selon la revendication 1, caractérisé en ce qu'à un circuit de courant de soudage (2) sont associés un circuit de commande de temps total (5) pour le dosage de l'énergie de soudage nécessitée par le manchon (15) ainsi qu'un circuit de commande de temps de préchauffage (6), ce dernier assurant, après écoulement de l'intervalle de préchauffage, la commutation du circuit de courant de soudage (2) sur la puissance nominale de soudage tandis que le circuit de commande de temps total (5) ouvre le circuit de courant de soudage (2) après terminaison de la fourniture de l'énergie de soudage.

3. Appareil selon la revendication 2, caractérisé en ce qu'il est prévu dans le circuit de courant de soudage (2) une diode (8) qui, au bout de l'intervalle de préchauffage, peut être courtcircuitée par un étage de commande (10) branché en parallèle.

4. Appareil selon la revendication 2 ou 3, caractérisé en ce que le circiut de commande de temps total (5) et le circuit de commande de temps de préchauffage (6) sont munis des moyens d'indication (11, 12) pour indiquer l'étaten service de l'appareil.